(19) **Europäisches Patentamt / European Patent Office / Office européen des brevets**

(11) **EP 4 407 206 B1**

(12) **EUROPEAN PATENT SPECIFICATION**

(45) Date of publication and mention
of the grant of the patent:
**24.09.2025 Bulletin 2025/39**

(21) Application number: **24154276.0**

(22) Date of filing: **26.01.2024**

(51) International Patent Classification (IPC):
**F16D 48/00** *(2006.01)*

(52) Cooperative Patent Classification (CPC):
**F16D 48/00;** F16D 2500/1026; F16D 2500/10437;
F16D 2500/30415; F16D 2500/30426;
F16D 2500/50296; F16D 2500/70418

(54) **IMPROVED METHOD AND APPARATUS FOR CONTROLLING A POWER-TAKE-OFF ASSEMBLY OF A WORK VEHICLE**

VERBESSERTES VERFAHREN UND VORRICHTUNG ZUR STEUERUNG EINER ZAPFWELLENANORDNUNG EINES ARBEITSFAHRZEUGS

PROCÉDÉ ET APPAREIL AMÉLIORÉS POUR COMMANDER UN ENSEMBLE DE PRISE DE FORCE D'UN VÉHICULE DE TRAVAIL

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.01.2023 IT 202300001275**

(43) Date of publication of application:
**31.07.2024 Bulletin 2024/31**

(73) Proprietor: **CNH Industrial Italia S.p.A.**
**10156 Torino (IT)**

(72) Inventors:
- **MESCIA, Claudio**
  **10156 Turin (IT)**
- **VENTURINI, Giorgio**
  **10156 Turin (IT)**
- **PETRIGLIANO, Rocco**
  **10156 Turin (IT)**

(74) Representative: **CNH Industrial IP Department**
**Leon Claeysstraat 3A**
**8210 Zedelgem (BE)**

(56) References cited:
**EP-A1- 4 019 795         US-A1- 2005 217 397**
**US-A1- 2018 066 717**

**Description**

TECHNICAL FIELD

The present invention relates to a method and to an apparatus for controlling the power-take-off assembly of a work vehicle, in particular of an off road vehicle such as an agricultural vehicle. See US 2018/066717 as prior art.

BACKGROUND OF THE INVENTION

As is known, work vehicles such as agricultural vehicles are provided at least with one power-take-off assembly adapted to transmit mechanical power to equipment or work implements towed or carried by the same work vehicle, such as mowers, balers, forage harvesters, spreaders, or the like.

More in detail, such power-take-off assembly usually comprises at least: a driving shaft carried by an internal combustion engine or by a gearbox of the work vehicle; a driven splined shaft, which is adapted to be mechanically connected to the work implement towed or carried by the work vehicle, for instance by means of a universal joint shaft; and a hydraulically operated clutch, which is operatively interposed between the driving shaft and the driven splined shaft and is configured to selectively engage the driving shaft with the driven splined shaft, in order to transmit the mechanical power of the internal combustion engine to the attached work implement.

In addition, such work vehicles comprise also valve means, and an electronic control unit adapted to control the engagement of the hydraulically actuated clutch of the power-take-off assembly.

Unfortunately, the control logic deployed in the above-mentioned electronic control unit does not take into account the wear and the damages that may occur on the hydraulically actuated clutch of the power-take-off assembly over time, during work vehicle useful working life, with all the problems that this entails.

In particular, the wear and the damages on the hydraulic actuated clutch of the power-take-off assembly may worsen the engagement of the same hydraulic actuated clutch, as it may occur in a more abrupt and less progressive manner.

This may affect the mechanical resistance of the mechanical components of the power-take-off assembly and/or of the work implements attached thereto and may cause jerks or oscillation dangerous for the work vehicle operator.

In addition, the performances of the hydraulically actuated clutch may decrease over the useful life of the work vehicle, and eventually it may occur that it does not engage correctly, with all the problems that this entails.

In view of the above, the need is felt for an improvement in the control of the engagement of a hydraulically actuated clutch of a power-take-off assembly of a work vehicle.

Aim of the present invention is to satisfy the above-mentioned needs in a cost effective and optimized manner.

SUMMARY OF THE INVENTION

The afore-mentioned aims are reached by a method, by an apparatus and by a work vehicle as claimed in the appended set of claims.

BRIEF DESCRIPTION OF DRAWINGS

For a better understanding of the present invention, a preferred embodiment is described in the following, by way of a non-limiting example, with reference to the attached drawings, wherein:

- Figure 1 is a schematic representation of a work vehicle according to the present invention;
- Figure 2 and Figure 3 are two flow charts representing schematically the control executed according to the present invention; and
- Figure 4 is a diagram of the variation of the control current of a power-take-off clutch over time during the control executed according to the method of the invention.

DETAILED DESCRIPTION OF THE INVENTION

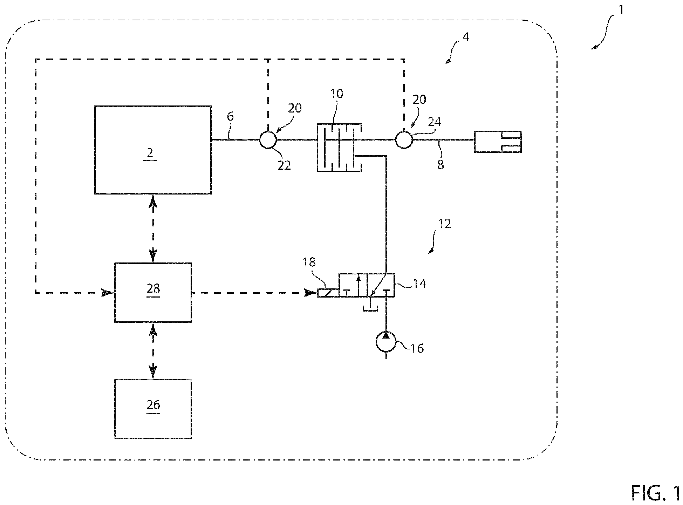

Figure 1 schematically represents a work vehicle, preferably an agricultural vehicle such as a tractor, denoted as a whole with reference number 1.

Work vehicle 1 comprises a powertrain assembly 2, which is carried by a work vehicle body (not illustrated) and is adapted to provide torque to allow motion of the vehicle body with respect to the ground, e.g. thanks to at least one pair of wheels or tracks (not illustrated).

In particular, powertrain assembly 2 may comprise an engine. For example, said engine may be an internal combustion engine such as a diesel, gasoline or natural gas powered internal combustion engine.

In addition, powertrain assembly 2 preferably comprises also a drivetrain assembly or transmission assembly, which is operatively interposed between the engine and at least one pair of ground-engaging wheels, in a manner per se known and therefore not further described.

According to the described embodiment, work vehicle 1 comprises at least one power-take-off (PTO) assembly 4, which is carried by the powertrain assembly 2 and is adapted to transmit mechanical power to equipment or work implements towed or carried by work vehicle 1.

More in detail, power-take-off-assembly 4 may be carried by an engine output shaft, such as an engine crankshaft, and /or by an output shaft of drivetrain assembly, in a manner per se known and therefore not further described.

With reference to the example shown in Figure 1, in particular, PTO assembly 4 comprises at least: an input shaft 6 carried by powertrain assembly 2; an output shaft 8 adapted to be mechanically connected to the work implement towed or carried by work vehicle 1; and a hydraulically actuated power-take-off (PTO) clutch 10, which is operatively interposed between input shaft 6 and output shaft 8, and is adapted to selectively engage output shaft 8 to input shaft 6, in order to transmit mechanical power from powertrain assembly 2 to output shaft 8 and to the work implement attached thereto.

More in detail, as known, input shat 6 may be carried by the engine of work vehicle 1.

In addition, as always known, output shaft 8 may comprise a splined shaft adapted to be mechanically coupled to the equipment or work implement towed or carried by work vehicle 1, for instance by means of a universal joint shaft.

With reference to the exemplary embodiment illustrated in Figure 1, hydraulically actuated PTO clutch 10 preferably comprises a multi-plates hydraulically actuated wet clutch.

In addition, PTO assembly 4 further comprises electrically actuated valve means 12, which are adapted to control the operation of hydraulically actuated PTO clutch 10.

Preferably, valve means 12 are operatively interposed between a source of pressurized hydraulic fluid 16 and the hydraulically actuated PTO clutch 10, and are configured to control/regulate the flow of pressurized hydraulic fluid fed from the source of pressurized hydraulic fluid 16 to the hydraulically actuated PTO clutch 10.

More in detail, valve means 12 preferably comprise a solenoid-controlled proportional hydraulic valve 14.

Preferably, valve 14 is configured to regulate the pressure of pressurized hydraulic fluid fed towards hydraulic actuated PTO clutch 10 according to the current applied to a solenoid 18 associated with valve 14.

By applying a variable current signal to solenoid 18 of valve 14, it is therefore possible to control the pressure of the hydraulic fluid applied to hydraulically actuated PTO clutch 10.

The relation/proportion between the solenoid current applied on solenoid 18 and the resulting hydraulic pressure applied on PTO clutch 10 depends on valve 14 physical characteristics, for instance on valve P/I characteristic (Pressure-Current characteristic), which are well known and therefore are not further discussed.

According to the described embodiment, hydraulically actuated PTO clutch 10 is preferably configured to transfer a torque from input shaft 6 to output shaft 8 according to the pressure of the hydraulic fluid applied to the same hydraulic actuated PTO clutch 10.

Accordingly, the torque transferred from input shaft 6 to output shaft 8 by PTO clutch 10 will depend on the current signal applied on solenoid 18 of valve 14.

With reference to the exemplary embodiment illustrated in Figure 1, in addition, PTO assembly 4 further comprises sensor means 20, which are configured to measure/detect at least the angular velocity of output shaft 8.

In addition, sensor means 20 are preferably configured to also measure/detect the angular velocity of input shaft 6.

Preferably, sensor means 20 may comprise a first angular velocity sensor 22, which is associated to input shaft 6 and is configured to measure the angular velocity of the same input shaft 6.

Clearly, the angular velocity of input shaft 6 depends on the rotation speed of powertrain assembly 2. For example, the angular velocity of input shaft 6 may be equal or directly proportional to the rotation speed of the engine of work vehicle 1.

In addition, sensor means 20 preferably comprise also a second angular velocity sensor 24, which is associated to output shaft 8 and is configured to measure the angular velocity of the same output shaft 8.

In other words, first angular velocity sensor 22 is preferably configured to measure the angular velocity of input shaft 6, upstream PTO clutch 10, and second angular velocity sensor 24 is preferably configured to measure the angular velocity of output shaft 8, downstream PTO clutch 10.

With reference to the exemplary embodiment illustrated in Figure 1, work vehicle 1 may further comprise an input device 26, for instance a joystick, a lever, a button, a knob or the like, which is adapted to be operated/handled by a user of work vehicle 1 in order to impart control signals adapted to control the engagement of PTO assembly 4.

More in detail, input device 26 may be operated/handled by work vehicle 1 user in order to impart control signals adapted to control the actuation of PTO clutch 10, in order to selectively engage or disengage PTO assembly 4.

Alternatively, or in addition, input device 26 may comprise a virtual button embedded on a touch-sensitive screen device carried within the driver's cabin of work vehicle 1.

With reference to the exemplary embodiment illustrated in Figure 1, in addition, work vehicle 1 is further provided with an electronic control unit 28, which comprises elaboration means suitable for controlling the operation of PTO assembly 4 according to a PTO clutch engagement control logic that is described more in detail in the following.

Electronic control unit 28 may either be the ECU of work vehicle 1 or may be separate and distinct from work vehicle 1 ECU and may be electronically connected to the same work vehicle 1 ECU.

Electronic control unit 28, in particular, is preferably operatively connected at least to sensor means 20 and to valve means 12 of PTO assembly 4 and is preferably configured to control the actuation of valve means 12 of PTO clutch 10 according to the engagement control logic that is described more in detail in the following.

Such engagement control logic, for instance, may be deployed into a specific software code, which can be downloaded into the electronic control unit 28 and is configured to execute the control method as described in the following.

In addition, electronic control unit 28 may be electrically connected to input device 26 and may be configured to control the operation of PTO assembly 4 according to the control signals coming from input device 26.

More in detail, electronic control unit may be configured to control valve means 12 in order to engage and/or disengage PTO clutch 10 according to the control signals coming from input device 26.

The operation of the above-described PTO assembly 4 is the following.

At an initial condition, suppose that the PTO assembly 4 is disconnected, meaning that hydraulically actuated PTO clutch 10 is initially disengaged and valve means 12 are initially closed.

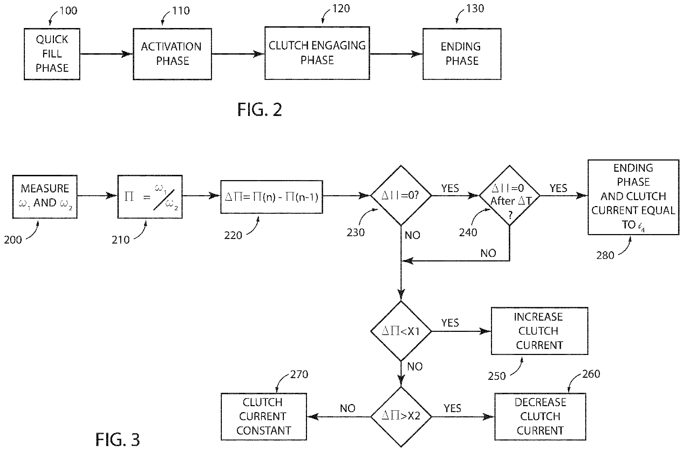

Then, with reference to the example shown in Figure 2, supposing that the user handles input device 26 to impart a control signal adapted to engage PTO assembly 4 starting from the above initial condition, the electronic control unit 28 will control valve means 12 as follow.

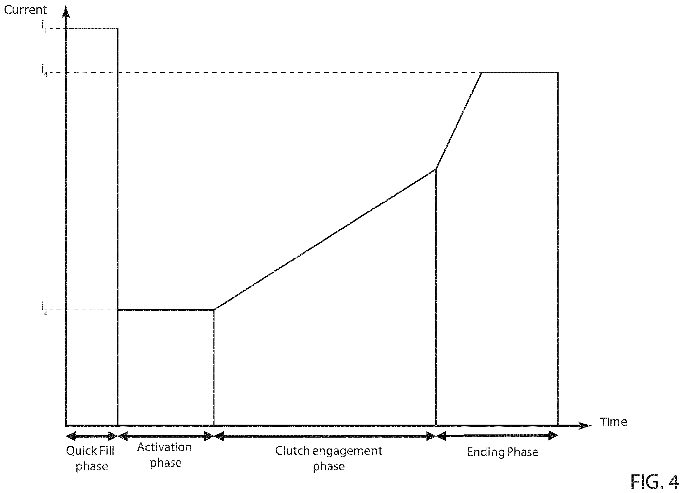

With reference to Figures 2 and 4, in a first phase, also referred to as "quick fill phase", electronic control unit 28 will control valve means 12 to open, in order to quickly fill PTO clutch 10 with hydraulic fluid (block 100).

More in detail, in the first phase, electronic control unit 28 is configured to feed a first pilot current $i_1$ for a first time interval $t_1$ to valve means 12, in order to feed a high flow of hydraulic fluid towards PTO clutch 10 and quickly fill this latter.

In even more detail, in the first phase, electronic control unit 28 is configured to feed the first pilot current $i_1$ for the first time interval $t_1$ to solenoid 18, in order to open valve 14.

Then, in a second phase, also referred to as "activation phase", electronic control unit 28 will control valve means 12 to modulate the flow of hydraulic fluid towards PTO clutch 10 until PTO clutch disks come into contact with each other, i.e. until they reach the "kiss point", and the same PTO clutch starts to transfer torque between input shaft 6 and output shaft 8 (block 110).

More in detail, in the second phase electronic control unit 28 is configured to feed a second pilot current $i_2$ for a second time interval $t_2$ to valve means 12, in order to feed a controlled flow of hydraulic fluid towards PTO clutch 10 until PTO clutch disks come into contact with each other, i.e. until kiss point.

In even more detail, in the second phase electronic control unit 28 is configured to feed the second pilot current $i_2$ for the second time interval $t_2$ to solenoid 18, in order to modulate the opening of valve 14 and feed a controlled flow of hydraulic fluid towards PTO clutch 10 until PTO clutch 10 kiss point.

Second time interval $t_2$ for instance may be comprised between 100 milliseconds and 1000 milliseconds, and more precisely it may be equal to about 400 milliseconds.

Preferably, the magnitude of first pilot current $i_1$ is greater than the magnitude of second pilot current $i_2$.

Then, with reference to Figure 2 and 3, in a third phase, also referred to as "clutch engaging phase" or "clutch swapping phase", electronic control unit 28 is configured to recursively control valve means 12 according to a closed-loop control function described in detail in the following (block 120).

More in detail, during clutch engaging phase, electronic control unit 28 is preferably configured to recursively control valve means 12 in order to engage PTO assembly 4 in a progressive and stepless manner.

In even more detail, during clutch engaging phase, electronic control unit 28 is preferably configured to recursively control valve means 12 in order to engage PTO clutch 10 so that output shaft 8 has a constant angular acceleration with respect to input shaft 6.

In other words, during the clutch engaging phase, electronic control unit 28 is preferably configured to recursively control valve means 12 in order to engage PTO assembly 4 with a constant variation of the ratio between output shaft 8 angular velocity and input shaft 6 angular velocity.

According to the disclosed embodiment, in particular, during clutch engaging phase, electronic control unit 28 is preferably configured to recursively control the pilot current applied to valve means 12, and accordingly the pressure of the hydraulic fluid fed towards PTO clutch 10, on the basis of the angular velocity of output shaft 8 and of the angular velocity of input shaft 6.

More in detail, electronic control unit 28 is configured to retrieve a first value $\omega_1$ associated with the angular velocity of input shaft 6 (block 200).

In particular, electronic control unit 28 is preferably configured to retrieve the first value $\omega_1$ from sensor means 20, in particular from sensor 22.

In addition, electronic control unit 28 is configured to retrieve a second value $\omega_2$ associated with the angular velocity of output shaft 8 (block 200).

In particular, electronic control unit 28 is preferably configured to retrieve the second value $\omega_2$ from sensor means 20, in particular from sensor 24.

Then, with reference to the example shown in Figure 3, electronic control unit 28 is configured to calculate an angular velocity ratio $\pi$ by dividing angular velocity $\omega_2$ by angular velocity $\omega_1$, according to the following mathematical expression:

$$\pi = {}^{\omega_2}/_{\omega_1},$$

wherein $\omega_1$ is the angular velocity of input shaft 6 and $\omega_2$ is the angular velocity of output shaft 8 (block 210).

Then, once calculated the angular velocity ratio $\pi$, electronic control unit 28 is further configured to calculate /determine a quantity $\Delta_\pi$ associated to an angular velocity ratio variation of the angular velocity ratio $\pi$ over time, by subtracting to the value of the angular velocity ratio $\pi(n)$ at a sampling instant $n$ the value of the angular velocity ratio $\pi(n\text{ - }1)$ at a previous sampling instant $n\text{-}1$, according to the following mathematical expression:

$$\Delta_\pi = \pi(n) - \pi(n - 1),$$

wherein $\pi(n)$ is the angular velocity ratio $\pi$ at sampling instant $n$, and $\pi(n\text{ - }1)$ is the angular velocity ratio $\pi$ at a the previous sampling instant $n\text{-}1$ (block 210).

Then, if such angular velocity ratio variation $\Delta_\pi$ is equal to zero, it means that between the two sampling instant $n\text{-}1$ and n considered, the ratio between angular velocity $\omega_2$ and angular velocity $\omega_1$ has remained constant.

This may happen when the angular velocity $\omega_2$ is equal to the angular velocity $\omega_1$, meaning that PTO clutch 10 has engaged and output shaft 8 and input shaft 6 are spinning/rotating with the same angular velocity.

However, the ratio between angular velocity $\omega_2$ and angular velocity $\omega_1$ may remain constant also when the variation of angular velocity $\omega_2$ is equal to the variation of angular velocity $\omega_1$, i.e. when the angular accelerations of input shaft 6 and of output shaft 8 are the same. In such conditions, however, angular velocity $\omega_2$ may not be equal to angular velocity $\omega_1$, meaning that input shaft 6 and output shaft 8 may be spinning with different angular velocities and PTO clutch may be slipping.

Therefore, electronic control unit 28 is preferably configured to verify/control if the angular velocity ratio variation $\Delta_\pi$ remains equal to zero for third time interval $\Delta T$, such as for example 100 milliseconds (block 240).

In other words, electronic control unit 28 is preferably configured to verify/control if the angular velocity ratio variation $\Delta_\pi$ remains equal to zero for a predetermined number of sampling instants, such as for example 100 sampling instants.

If the angular velocity ratio variation $\Delta_\pi$ remains equal to zero for the third time interval $\Delta T$, then it means that the PTO clutch 10 has correctly engaged, and that angular velocity $\omega_2$ is equal to angular velocity $\omega_1$, i.e. output shaft 8 and input shaft 6 are spinning/rotating with the same angular velocity.

On the other hand, when the angular velocity ratio variation $\Delta_\pi$ is different from zero, it means that PTO clutch 10 has not engaged yet and there is still a difference between angular velocity $\omega_2$ and the angular velo-

city $\omega_1$.

In such case, electronic control unit 28 is configured to control valve means 12 according to the value of the angular velocity ratio variation $\Delta_\pi$, meaning according to the value of the variation of the ratio between the angular velocity $\omega_2$ and angular velocity $\omega_1$.

More in detail, electronic control unit 28 is configured to increase the pilot current applied to valve means 12 and hence the hydraulic pressure exerted on PTO clutch 10 if the angular velocity ratio variation $\Delta_\pi$ is lower that a first value/threshold $X_1$ (block 250).

Conversely, electronic control unit 28 is configured to decrease the pilot current applied to valve means 12 and hence the hydraulic pressure exerted on PTO clutch 10 if the angular velocity ratio variation $\Delta_\pi$ is greater that a second value/threshold $X_2$ (block 260).

Preferably, second threshold $X_2$ is greater than the first threshold $X_1$.

Alternatively, the first threshold $X_1$ and the second threshold $X_2$ may coincide.

In addition, electronic control unit 28 is configured to keep the pilot current applied to valve means 12 constant if the angular velocity ratio variation $\Delta_\pi$ falls within the range defined by thresholds $X_1$ and $X_2$ (block 270).

Lastly, in a fourth phase, also referred to as "ending phase", when the angular velocity of output shaft 8 matches the angular velocity of input shaft 6, meaning that PTO clutch 10 is engaged, electronic control unit 28 will control valve means 12 to remain in the open operation condition, in order to keep PTO clutch 10 engaged (block 130).

More in detail, in the fourth phase, electronic control unit 28 is configured to feed a fourth pilot current $i_4$ to valve means 12, in order to keep the same valve means 12 in the open operation condition and maintain PTO clutch 10 engaged (block 280).

Preferably, the magnitude of fourth pilot current $i_4$ is greater than the magnitude of second pilot current $i_2$.

Such operation is schematized in graphics reported in Figure 4, which schematically represent the diagram of the pilot current $i$ applied to valve means 12 as function of time during the clutch engaging phase of hydraulically actuated PTO clutch 10.

More in detail, in Figure 4 it is noticed:

    a) the first phase or quick fill phase, wherein pilot current of valve means 12 is equal to value $i_1$; in such phase, valve means 12 are preferably completely open, to fill PTO clutch 10 with hydraulic fluid;
    b) the second phase or activation phase, wherein pilot current of valve means 12 is equal to value $i_2$; in such phase valve means 12 are preferably partially open to feed a flow of hydraulic fluid towards PTO clutch 10 until kiss point;
    c) the third phase or clutch engaging phase; and
    d) the fourth phase or ending phase, wherein pilot current of valve means 12 is equal to value $i_4$; in such

phase valve means 12 are kept in the open operation condition to keep PTO clutch 10 engaged.

According to the above operation and with reference to Figure 2 and 3, the present invention is directed to a method for controlling the PTO assembly 4 of a work vehicle 1 as described above and comprising at least the following steps:

    i) receiving a signal request to engage PTO assembly 4;

    ii) feeding first pilot current $i_1$ to valve means 12 for the first time interval $t_1$;

    iii) measuring/determining output shaft 8 angular velocity $\omega_2$ (block 200);

    iv) measuring/determining input shaft 6 angular velocity $\omega_1$ (block 200);

    v) calculating/determining the angular velocity ratio $\pi$ by dividing the angular velocity $\omega_2$ of output shaft 8 by the angular velocity $\omega_1$ of input shaft 6 (block 210);

    vi) calculating/determining the angular velocity ratio variation $\Delta_\pi$ of angular velocity ratio $\pi$ (block 220);

    vii) determining if the angular velocity ratio variation $\Delta_\pi$ is equal to zero (block 230);

    viii) if the angular velocity ratio variation $\Delta_\pi$ is equal to zero, feeding second pilot current $i_4$ to valve means 12 in order to keep PTO clutch 10 engaged (block 240); and

    ix) if angular velocity ratio variation $\Delta_\pi$ is different from zero, controlling the pilot current supplied to valve means 12 as function of the angular velocity ratio variation $\Delta_\pi$.

Preferably, the value of first pilot current $i_1$ is determined so as to open completely valve means 12.

Moreover, first time interval $t_1$ is calculated/determined in order to fill PTO clutch 10 with hydraulic fluid.

In addition, the calculation of angular velocity ratio variation $\Delta_\pi$ during above step vi) preferably foresees the step of subtracting to the value of the angular velocity ratio $\pi(n)$ at a sampling instant $n$ the value of the angular velocity ratio $\pi(n - 1)$ at a previous sampling instant $n-1$.

Moreover, according to the disclosed example, above step ix) in turn preferably comprises the steps of:

    x) increasing the pilot current applied to valve means 12 if angular velocity ratio variation $\Delta_\pi$ is lower than the first threshold $X_1$ (block 250);

    xi) decreasing the pilot current applied to valve means 12 if angular velocity ratio variation $\Delta_\pi$ is higher than the second threshold $X_2$ (block 260); or

    xii) keeping the pilot current applied to valve means 12 constant if angular velocity ratio variation $\Delta_\pi$ is greater or equal than the first threshold $X_1$ and at the same time is lower or equal than the second threshold $X_2$ (block 270).

Clearly, by increasing or decreasing the pilot current applied valve means 12, the hydraulic pilot pressure applied to PTO clutch 10 increases or decreases accordingly. ,

In addition, with reference to the example illustrated in Figure 2 and 4, after above step ii) and before step iii), the method preferably comprises also a step of feeding the second current $i_2$ to valve means 12 until PTO clutch kiss point, i.e. until disks of PTO clutch 10 comes into contact with each other and PTO clutch 10 starts to transfer torque from input shaft 6 to output shaft 8.

More in detail, the step of feeding the second current $i_2$ to valve means 12 until kiss point preferably comprises the step of feeding the second current $i_2$ to valve means 12 for the second time interval $t_2$.

In addition, with reference to the exemplary embodiment illustrated in Figure 3, above step viii) preferably comprises the step of verifying/controlling if the angular velocity ratio variation $\Delta_\pi$ remains equal to zero for the third time interval $\Delta T$.

In other words, above step viii) preferably comprises the step of verifying/controlling if the angular velocity ratio variation $\Delta_\pi$ remains equal to zero for a predetermined number of sampling instants.

In addition, if the angular velocity ratio variation $\Delta_\pi$ remains equal to zero for the third time interval $\Delta T$, the method preferably comprises the step of feeding the second pilot current $i_4$ to valve means 12 in order to keep PTO clutch 10 engaged (block 240).

If, on the other hand, the angular velocity ratio variation $\Delta_\pi$ does not remain equal to zero for the third time interval $\Delta T$, the method preferably comprises the step of controlling the pilot current supplied to valve means 12 as function of the angular velocity ratio variation $\Delta_\pi$ of angular velocity ratio $\pi$.

In other words, if the angular velocity ratio variation $\Delta_\pi$ does not remain equal to zero for the third time interval $\Delta T$, the method preferably foresees to carry out above step ix).

In view of the foregoing, the advantages of a work vehicle 1 provided with an apparatus configured to carry out the method according to the present invention are apparent.

In fact, thanks to the proposed method, it is possible to modulate dynamically the PTO assembly 4 engagement as function of the response of the hydraulically actuated PTO clutch 10 and advantageously as function of the angular acceleration of the output shaft with respect to input shaft 6 as well.

This allows to engage the PTO assembly 4 in a smooth and stepless manner, and to compensate for any wear or damage that may occur of PTO clutch 10. Indeed, the pilot current supplied to valve means 12 and hence the pressure of hydraulic fluid fed towards PTO clutch 10 is controlled according to a closed loop control function, which takes into account both the angular velocity of PTO input shaft 6 and PTO output shaft 8.

More in detail, the proposed method allows to engage PTO assembly 4 in a progressive and stepless manner, even if the performances of PTO clutch 10 were to vary over the useful lifetime of work vehicle 1 due to damages or wear.

In fact, the proposed method allows to dynamically modulate the pilot current supplied to valve means 12 as function of the ratio between the angular velocity of PTO output shaft 8 and the angular velocity of input shaft 6 and engine during PTO clutch 10 engagement, and hence allows to compensate for any reduction in PTO clutch 10 performances.

In addition, the proposed method allows to ensure that the PTO assembly 4 engages correctly when required by the user, with all the benefits that this entail. In fact, by modulating the pilot current supplied to valve means 12, it is possible to increase the pressure of the hydraulic fluid fed towards PTO clutch 10, in order to ensure that the same PTO clutch 10 engages correctly even if its performances decreases due to wear or damages.

Lastly, by taking into account also the input shaft 6 angular velocity when performing the calculation to modulate the pilot current applied to valve means 12, the proposed method allows to account also for any reduction in the powertrain assembly 2 rotation speed that may occur when engaging the PTO assembly 4, due to the increased load applied on the same powertrain assembly 2. This allows to optimize the engagement of the PTO clutch 10 and to avoid jerks or oscillation dangerous for the work vehicle operator.

It is clear that modifications can be made to the described apparatus and method which do not extend beyond the scope of protection defined by the claims.

## Claims

1. A method to control

the engagement of a power-take-off assembly (4) of a work vehicle (1); said power-take-off assembly (4) being configured to be coupled to a powertrain assembly (2) of said work vehicle (1) for transmitting torque to a work implement carried by said work vehicle (1); said power-take-off assembly (4) comprising at least:

• an input shaft (6) adapted to be carried by said powertrain assembly (2);
• an output shaft (8) adapted to be connected to said work implement;
• a hydraulically actuated power-take-off clutch (10), which is operatively interposed between said input shaft (6) and said output shaft (8), and is adapted to selectively engage said output shaft (8) with said input shaft (6); and
• electrically actuated valve means (12), which are operatively interposed between said hydraulically actuated power-take-off clutch (10) and a source of pressurized hydraulic fluid (16), and are configured to control the flow of said pressurized hydraulic fluid fed towards said hydraulically actuated power-take-off clutch (10), in order to control its engagement;

said method comprising the following steps:

i) receiving a request to engage said power-take-off assembly (4);
ii) feeding a first pilot current ($i_1$) to said valve means (12) for a first time interval ($t_1$);
iii) determining a first angular velocity ($\omega_1$) of said input shaft (6);
iv) determining a second angular velocity ($\omega_2$) of said output shaft (8);
v) calculating an angular velocity ratio ($\pi$) by dividing said second angular velocity ($\omega_2$) by said first angular velocity ($\omega_1$);
vi) calculating an angular velocity ratio variation ($\Delta_\pi$) of said angular velocity ratio ($\pi$) over time;
vii) determining if said angular velocity ratio variation ($\Delta_\pi$) is equal to zero; the method being **characterised in that**
viii) if said angular velocity ratio variation ($\Delta_\pi$) is equal to zero, feeding a second pilot current ($i_4$) to said valve means (12) in order to keep said power-take-off clutch (10) engaged; and
ix) if said angular velocity ratio variation ($\Delta_\pi$) is different from zero, controlling the pilot current supplied to said valve means (12) as function of said angular velocity ratio variation ($\Delta_\pi$).

2. Method according to claim 1, wherein said step vi) comprises the step of subtracting, to the value of said angular velocity ratio ($\pi(n)$) at a sampling instant **(n)**, the value of said angular velocity ratio variation ($\pi$ **(-1))** at a previous sampling instant **(n - 1).**

3. Method according to claim 1 or 2, wherein said step ix) comprises the step of:

x) increasing the pilot current applied to said valve means (12) if said angular velocity ratio variation ($\Delta_\pi$) is lower than a first threshold ($X_1$); or
xi) decreasing the pilot current applied to said valve means (12) if said angular velocity ratio variation ($\Delta_\pi$) is greater than a second threshold ($X_2$), wherein said first threshold ($X_1$) is lower or

equal to said second threshold ($X_2$).

4. Method according to claim 3, wherein said step viii) further comprises the step of:
xii) keeping the pilot current applied to said valve means (12) constant if said angular velocity ratio variation ($\Delta_\pi$) is greater or equal than said first threshold ($X_1$) and at the same time is lower or equal than said second threshold ($X_2$).

5. Method according to any of the preceding claims, further comprising, after said step ii) and before said step iii), the step of feeding a third pilot current ($i_2$) to said valve means (12) for a second time interval ($t_2$), until disks of hydraulically-actuated power-take-off clutch (10) comes into contact with each other and said power-take-off clutch (10) starts to transfer torque from said input shaft (6) to said output shaft (8).

6. Method according to any of the preceding claims, wherein said step viii) comprises the steps of:

   xiii) verifying if said angular velocity ratio variation ($\Delta_\pi$) remains equal to zero for a third time interval ($\Delta T$);
   xiv) if said angular velocity ratio variation ($\Delta_\pi$) remains equal to zero for said third time interval ($\Delta T$), feeding said second pilot current ($i_4$) to said valve means (12) in order to keep said power-take-off clutch (10) engaged; and
   xv) if said angular velocity ratio variation ($\Delta_\pi$) does not remain equal to zero for said third time interval ($\Delta T$), controlling the pilot current supplied to said valve means (12) as function of said angular velocity ratio variation ($\Delta_\pi$).

7. Apparatus for controlling a power-take-off assembly (4) of a work vehicle (1), the apparatus comprising an electronic control unit (28) configured to carry out the method of any of the foregoing claims.

8. A work vehicle (1) comprising at least:

   • a powertrain assembly (2) carried by a work vehicle body and configured to provide torque to allow motion of said work vehicle body with respect to the ground; and
   • a power-take-off-assembly (4) configured to be coupled to said powertrain assembly (2) for transmitting torque to a work implement carried by said work vehicle (1);

   said power-take-off assembly (4) comprising:

   • an input shaft (6) carried by said powertrain assembly (2);
   • an output shaft (8) adapted to be connected to said work implement;

   • a hydraulically actuated power-take-off clutch (10), which is operatively interposed between said input shaft (6) and said output shaft (8) and is adapted to selectively engage said output shaft (8) with said input shaft (6); and
   • electrically actuated valve means (12), which are operatively interposed between said hydraulically actuated power-take-off clutch (10) and a source of pressurized hydraulic fluid (16), and are configured to control the flow of said pressurized hydraulic fluid fed towards said hydraulically actuated power-take-off clutch (10), in order to control its engagement;
   • sensor means (20) configured to detect the angular velocity of said input shaft (6) and/or the angular velocity of said output shaft (8);

   said work vehicle (1) further comprising an apparatus according to claim 7, which is operatively connected to said electrically actuated valve means (12) and to said sensor means (20), and is configured to carry out the method of any of claims from 1 to 6.

9. A computer-readable means having stored thereon a software code comprising instructions which, when executed by electronic control unit of claim 7 or 8, cause said electronic control unit (28) to carry out the method of any of claims from 1 to 6.

**Patentansprüche**

1. Verfahren zur Steuerung des Eingriffs einer Zapfwellenanordnung (4) eines Arbeitsfahrzeugs (1);

   wobei die Zapfwellenanordnung (4) dazu eingerichtet ist, mit einer Antriebsstranganordnung (2) des Arbeitsfahrzeugs (1) verbunden zu sein, um ein Drehmoment auf ein Arbeitsgerät zu übertragen, das von dem Arbeitsfahrzeug (1) getragen wird;
   wobei die Zapfwellenanordnung (4) mindestens aufweist:

   • eine Eingangswelle (6), die dazu eingerichtet ist, um von der Antriebsstrang-Anordnung (2) getragen zu werden;
   • eine Ausgangswelle (8), die dazu eingerichtet ist, mit dem Arbeitsgerät verbunden zu sein;
   • eine hydraulisch betätigte Zapfwellenkupplung (10), die zwischen der Eingangswelle (6) und der Ausgangswelle (8) in Wirkverbindung angeordnet ist, und die dazu eingerichtet ist, die Ausgangswelle (8) wahlweise mit der Eingangswelle (6) in Eingriff zu bringen; und
   • elektrisch betätigte Ventileinrichtungen (12), die zwischen der hydraulisch betätigten Zapfwellenkupplung (10) und einer Quelle für mit Druck beaufschlagter Hydraulikflüssigkeit (16) in Wirkverbindung angeordnet und dazu eingerichtet sind, das Fließen der mit Druck beaufschlagten Hydraulikflüssigkeit zu steuern, die in Richtung der hydraulisch betätigten Zapfwellenkupplung (10) zugeführt wird, um deren Eingreifen zu steuern;

wobei das Verfahren die folgenden Schritte aufweist:

i) Erhalten einer Anforderung, um die Zapfwellenanordnung (4) in Eingriff zu bringen;
ii) Zuführen eines ersten Steuerstroms ($i_1$) an die Ventileinrichtungen (12) für ein erstes Zeitintervall ($t_1$);
iii) Bestimmen einer ersten Winkelgeschwindigkeit ($\omega_1$) der Eingangswelle (6);
iv) Bestimmen einer zweiten Winkelgeschwindigkeit ($\omega_2$) der Ausgangswelle (8);
v) Berechnen eines Winkelgeschwindigkeits-Verhältnisses ($\pi$) durch das Teilen der zweiten Winkelgeschwindigkeit ($\omega_1$) durch die erste Winkelgeschwindigkeit ($\omega_1$);
vi) Berechnen einer Winkelgeschwindigkeitsverhältnis-Änderung ($\Delta_\pi$) des Winkelgeschwindigkeits-Verhältnisses ($\pi$) über die Zeit;
vii) Bestimmen, ob die Winkelgeschwindigkeitsverhältnis-Änderung ($\Delta_\pi$) gleich null ist;

wobei das Verfahren **dadurch gekennzeichnet ist, dass**

viii) wenn die Winkelgeschwindigkeitsverhältnis-Änderung ($\Delta_\pi$) gleich null ist, Zuführen eines zweiten Steuerstroms ($i_4$) an die Ventileinrichtungen (12), um die Zapfwellenkupplung (10) in Eingriff zu halten; und
ix) wenn die Winkelgeschwindigkeitsverhältnis-Änderung ($\Delta_\pi$) von null verschieden ist, Steuern des Steuerstroms, der den Ventileinrichtungen (12) zugeführt wird, als eine Funktion der Winkelgeschwindigkeitsverhältnis-Änderung ($\Delta_\pi$).

2. Verfahren nach Anspruch 1, wobei der Schritt vi) den Schritt aufweist: Subtrahieren von dem Wert des Winkelgeschwindigkeits-Verhältnisses ($\pi(n)$) zu einem Probenzeitpunkt (n) den Wert der Winkelgeschwindigkeitsverhältnis-Änderung ($\pi(-1)$) zu einem vorherigen Probenzeitpunkt (n - 1).

3. Verfahren nach Anspruch 1 oder 2, wobei der Schritt ix) den Schritt aufweist:

x) Erhöhen des Steuerstroms, der den Ventileinrichtungen (12) zugeführt wird, wenn die Winkelgeschwindigkeitsverhältnis-Änderung ($\Delta_\pi$) unter einem ersten Schwellenwert ($X_1$) liegt; oder
xi) Verringern des Steuerstroms, der den Ventileinrichtungen (12) zugeführt wird, wenn die Winkelgeschwindigkeitsverhältnis-Änderung ($\Delta_\pi$) größer als ein zweiter Schwellenwert ($X_2$) ist, wobei der erste Schwellenwert ($X_1$) gleich dem zweiten Schwellenwert ($X_2$) ist oder darunter liegt.

4. Verfahren nach Anspruch 3, wobei der Schritt viii) des Weiteren folgenden Schritt umfasst:
xii) Konstanthalten des Steuerstroms, der den Ventileinrichtungen (12) zugeführt wird, wenn die Winkelgeschwindigkeitsverhältnis-Änderung ($\Delta_\pi$) gleich dem ersten Schwellenwert ($X_1$) ist oder darüber liegt, und gleichzeitig gleich dem zweiten Schwellenwert ($X_2$) ist oder darunter liegt.

5. Verfahren nach einem der vorhergehenden Ansprüche, das des Weiteren nach dem Schritt ii) und vor dem Schritt iii), den Schritt des Zuführens eines dritten Steuerstroms ($i_2$) an die Ventileinrichtungen (12) für ein zweites Zeitintervall ($t_2$) aufweist, bis Scheiben der hydraulisch betätigten Zapfwellenkupplung (10) miteinander in Kontakt kommen und die Zapfwellenkupplung (10) beginnt, ein Drehmoment von der Eingangswelle (6) auf die Ausgangswelle (8) zu übertragen.

6. Verfahren nach einem der vorhergehenden Ansprüche, wobei Schritt viii) folgende Schritte aufweist:

xiii) Verifizieren, ob die Winkelgeschwindigkeitsverhältnis-Änderung ($\Delta_\pi$) für ein drittes Zeitintervall ($\Delta T$) gleich null bleibt;
xiv) wenn die Winkelgeschwindigkeitsverhältnis-Änderung ($\Delta_\pi$) für das dritte Zeitintervall ($\Delta T$) gleich null bleibt, Zuführen des zweiten Steuerstroms ($i_4$) an die Ventileinrichtungen (12), um die Zapfwellenkupplung (10) in Eingriff zu halten; und
xv) wenn die Winkelgeschwindigkeitsverhältnis-Änderung ($\Delta_\pi$) für das dritte Zeitintervall ($\Delta T$) nicht gleich null bleibt, Steuern des Steuerstroms, der an die Ventileinrichtungen (12) zugeführt wird, als eine Funktion der Winkelgeschwindigkeitsverhältnis-Änderung ($\Delta_\pi$).

7. Vorrichtung zur Steuerung einer Zapfwellenanordnung (4) eines Arbeitsfahrzeugs (1), wobei die Vorrichtung eine elektronische Steuereinheit (28) umfasst, die dazu eingerichtet ist, das Verfahren nach einem der vorhergehenden Ansprüche auszuführen.

**8.** Arbeitsfahrzeug (1), das mindestens aufweist:

• eine Antriebsstrang-Anordnung (2), die von einem Arbeitsfahrzeugkörper getragen und dazu eingerichtet ist, ein Drehmoment bereitzustellen, um eine Bewegung des Arbeitsfahrzeugkörpers relativ zum Untergrund zu ermöglichen; und
• eine Zapfwellenanordnung (4), die dazu eingerichtet ist, mit der Antriebsstrang-Anordnung (2) gekoppelt zu sein, um auf ein Arbeitsgerät, das von dem Arbeitsfahrzeug (1) getragen wird, ein Drehmoment zu übertragen;

wobei die Zapfwellenanordnung (4) umfasst:

• eine Eingangswelle (6), die von der Antriebsstrang-Anordnung (2) getragen wird;
• eine Ausgangswelle (8), die dazu eingerichtet ist, um mit dem Arbeitsgerät verbunden zu sein;
• eine hydraulisch betätigte Zapfwellenkupplung (10), die zwischen der Eingangswelle (6) und der Ausgangswelle (8) in Wirkverbindung angeordnet und dazu eingerichtet ist, die Ausgangswelle (8) wahlweise mit der Eingangswelle (6) in Eingriff zu bringen; und
• elektrisch betätigte Ventileinrichtungen (12), die zwischen der hydraulisch betätigten Zapfwellenkupplung (10) und einer Quelle für mit Druck beaufschlagter Hydraulikflüssigkeit (16) in Wirkverbindung angeordnet und dazu eingerichtet sind, das Fließen der mit Druck beaufschlagten Hydraulikflüssigkeit zu steuern, die in Richtung der hydraulisch betätigten Zapfwellenkupplung (10) zugeführt wird, um deren Eingreifen zu steuern;
• Sensoreinrichtungen (20), die dazu eingerichtet sind, die Winkelgeschwindigkeit der Eingangswelle (6) und/oder die Winkelgeschwindigkeit der Ausgangswelle (8) zu erfassen;

wobei das Arbeitsfahrzeug (1) des Weiteren eine Vorrichtung nach Anspruch 7 aufweist, die mit den elektrisch betätigten Ventileinrichtungen (12) und den Sensoreinrichtungen (20) in Wirkverbindung steht und die dazu eingerichtet ist, das Verfahren nach einem der Ansprüche 1 bis 6 auszuführen.

**9.** Computerlesbares Medium mit darauf gespeichertem Softwarecode, der Anweisungen umfasst, die, wenn sie durch die elektronische Steuereinheit nach Anspruch 7 oder 8 ausgeführt werden, bewirken, dass die elektronische Steuereinheit (28) das Verfahren nach einem der Ansprüche 1 bis 6 ausführt.

**Revendications**

**1.** Un procédé pour contrôler la mise en prise d'un ensemble de prise de force (4) d'un véhicule de travail (1) ;

ledit ensemble de prise de force (4) étant configuré pour être couplé à un ensemble groupe motopropulseur (2) dudit véhicule de travail (1) afin de transmettre un couple à un outil de travail soutenu par ledit véhicule de travail (1) ;
ledit ensemble de prise de force (4) comprenant au moins :

• un arbre d'entrée (6) adapté pour être soutenu par ledit ensemble groupe motopropulseur (2) ;
• un arbre de sortie (8) adapté pour être raccordé audit outil de travail ;
• un embrayage de prise de force à actionnement hydraulique (10), qui est interposé fonctionnellement entre ledit arbre d'entrée (6) et ledit arbre de sortie (8), et qui est adapté pour mettre en prise de manière sélective ledit arbre de sortie (8) avec ledit arbre d'entrée (6) ; et
• des moyens de régulation à actionnement électrique (12), qui sont interposés fonctionnellement entre ledit embrayage de prise de force à actionnement hydraulique (10) et une source de fluide hydraulique sous pression (16), et qui sont configurés pour contrôler le débit dudit fluide hydraulique sous pression s'écoulant pour alimenter ledit embrayage de prise de force à actionnement hydraulique (10), afin de contrôler sa mise en prise ;

ledit procédé comprenant les étapes suivantes consistant à :

i) recevoir une demande de mise en prise dudit ensemble de prise de force (4) ;
ii) fournir un premier courant pilote ($i_1$) auxdits moyens de régulation (12) pendant un premier intervalle de temps ($t_1$) ;
iii) déterminer une première vitesse angulaire ($\Omega_1$) dudit arbre d'entrée (6) ;
iv) déterminer une seconde vitesse angulaire ($\omega_2$) dudit arbre de sortie (8) ;
v) calculer un rapport de vitesse angulaire ($\pi$) en divisant ladite seconde vitesse angulaire ($\omega_2$) par ladite première vitesse angulaire ($\Omega_1$) ;
vi) calculer une variation de rapport de vitesse angulaire ($\Delta_\pi$) dudit rapport de vitesse angulaire ($\pi$) au fil du temps ;
vii) déterminer si ladite variation de rapport

de vitesse angulaire $(\Delta_\pi)$ est égale à zéro ; le procédé étant **caractérisé en ce que**

viii) si ladite variation de rapport de vitesse angulaire $(\Delta_\pi)$ est égale à zéro, fournir un deuxième courant pilote $(i_4)$ auxdits moyens de régulation (12) afin de maintenir ledit embrayage de prise de force (10) en prise ; et

ix) si ladite variation de rapport de vitesse angulaire $(\Delta_\pi)$ est différente de zéro, contrôler le courant pilote fourni auxdits moyens de régulation (12) en fonction de ladite variation de rapport de vitesse angulaire $(\Delta_\pi)$.

2. Procédé selon la revendication 1, dans lequel ladite étape vi) comprend l'étape consistant à soustraire, à la valeur dudit rapport de vitesse angulaire $(\pi(n))$ à un instant d'échantillonnage (n), la valeur de ladite variation de rapport de vitesse angulaire $(\pi(-1))$ à un précédent instant d'échantillonnage (n - 1).

3. Procédé selon la revendication 1 ou la revendication 2, dans lequel ladite étape ix) comprend l'étape consistant à :

x) augmenter le courant pilote appliqué auxdits moyens de régulation (12) si ladite variation de rapport de vitesse angulaire $(\Delta_\pi)$ est inférieure à un premier seuil $(X_1)$ ; ou

xi) diminuer le courant pilote appliqué auxdits moyens de régulation (12) si ladite variation de rapport de vitesse angulaire $(\Delta_\pi)$ est supérieure à un second seuil $(X_2)$, dans lequel ledit premier seuil $(X_1)$ est inférieur ou égal audit second seuil $(X_2)$.

4. Procédé selon la revendication 3, dans lequel ladite étape viii) comprend en outre l'étape consistant à :

xii) maintenir l'application du courant pilote constante auxdits moyens de régulation (12) si ladite variation de rapport de vitesse angulaire $(\Delta_\pi)$ est supérieure ou égale audit premier seuil $(X_1)$ et en même temps inférieure ou égale audit second seuil $(X_2)$.

5. Procédé selon l'une quelconque des revendications précédentes, comprenant en outre, après ladite étape ii) et avant ladite étape iii), l'étape consistant à fournir un troisième courant pilote $(i_2)$ auxdits moyens de régulation (12) pendant un deuxième intervalle de temps $(t_2)$, jusqu'à ce que les disques de l'embrayage de prise de force à actionnement hydraulique (10) entrent en contact les uns avec les autres et que ledit embrayage de prise de force (10) commence à transférer le couple dudit arbre d'entrée (6) audit arbre de sortie (8).

6. Procédé selon l'une quelconque des revendications précédentes, dans lequel ladite étape viii) comprend les étapes consistant à :

xiii) vérifier si ladite variation de rapport de vitesse angulaire $(\Delta_\pi)$ reste égale à zéro pendant un troisième intervalle de temps $(\Delta T)$ ;

xiv) si ladite variation de rapport de vitesse angulaire $(\Delta_\pi)$ reste égale à zéro pendant ledit troisième intervalle de temps $(\Delta T)$, fournir ledit deuxième courant pilote (24) auxdits moyens de régulation (12) afin de maintenir ledit embrayage de prise de force (10) en prise ; et

xv) si ladite variation de rapport de vitesse angulaire $(\Delta_\pi)$ ne reste pas égale à zéro pendant ledit troisième intervalle de temps $(\Delta T)$, contrôler le courant pilote fourni auxdits moyens de régulation (12) en fonction de ladite variation de rapport de vitesse angulaire $(\Delta_\pi)$.

7. Appareil de commande d'un ensemble de prise de force (4) d'un véhicule de travail (1), l'appareil comprenant une unité de commande électronique (28) configurée pour mettre en œuvre le procédé selon l'une quelconque des revendications précédentes.

8. Un véhicule de travail (1) comprenant au moins :

• un ensemble groupe motopropulseur (2) soutenu par une carrosserie de véhicule de travail et configuré pour fournir un couple permettant le mouvement de ladite carrosserie de véhicule de travail par rapport au sol ; et

• un ensemble de prise de force (4) configuré pour être couplé audit ensemble groupe motopropulseur (2) afin de transmettre un couple à un outil de travail soutenu par ledit véhicule de travail (1) ;

ledit ensemble de prise de force (4) comprenant :

• un arbre d'entrée (6) soutenu par ledit ensemble groupe motopropulseur (2) ;

• un arbre de sortie (8) adapté pour être raccordé audit outil de travail ;

• un embrayage de prise de force à actionnement hydraulique (10), qui est interposé fonctionnellement entre ledit arbre d'entrée (6) et ledit arbre de sortie (8) et qui est adapté pour mettre en prise de manière sélective ledit arbre de sortie (8) avec ledit arbre d'entrée (6) ; et

• des moyens de régulation à actionnement électrique (12), qui sont interposés fonctionnellement entre ledit embrayage de prise de force à actionnement hydraulique (10) et une source de fluide hydraulique sous pression (16), et qui sont configurés pour contrôler le débit dudit fluide hydraulique sous pression s'écoulant pour alimenter ledit embrayage de prise de force à actionnement hydraulique (10), afin de contrôler sa mise en prise ;

• des moyens de détection (20) configurés pour détecter la vitesse angulaire dudit arbre d'entrée (6) et/ou la vitesse angulaire dudit arbre de sortie (8) ;

ledit véhicule de travail (1) comprenant en outre un appareil selon la revendication 7, qui est raccordé fonctionnellement auxdits moyens de régulation à actionnement électrique (12) et auxdits moyens de détection (20), et qui est configuré pour mettre en œuvre le procédé selon l'une quelconque des revendications 1 à 6.

9. Un moyen lisible par ordinateur sur lequel est stocké un code de logiciel comprenant des instructions qui, lorsqu'elles sont exécutées par l'unité de commande électronique selon la revendication 7 ou la revendication 8, amènent ladite unité de commande électronique (28) à mettre en œuvre le procédé selon l'une quelconque des revendications 1 à 6.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018066717 A